# EUROPEAN PATENT APPLICATION

(11) **EP 2 892 256 A1**
(43) Date of publication of application: **08.07.2015**
(21) Application number: 13841019.6
(22) Date of filing: 06.08.2013
(51) Int. Cl.: H04W 4/20, H04W 4/00, H04W 4/08

(54) **SMALL DATA SENDING METHOD AND SYSTEM, AND USER EQUIPMENT**

(30) Priority: 29.09.2012 CN 201210379380
(71) Applicant: ZTE Corporation, Shenzhen, Guangdong 518057 (CN)
(72) Inventor: XU, Hui, Shenzhen Guangdong 518057 (CN)
(74) Representative: Brevalex
(86) International application number: PCT/CN2013/080889
(87) International publication number: WO 2014/048173

(57) **Abstract**

A small data sending method and system and User Equipment (UE) are provided. The method includes that a server sends small data for a group of UE to an interworking gateway; the interworking gateway determines a broadcasting mode of sending the small data, and sends the small data to a target UE group by using the broadcasting mode; UE which received the small data in the target UE group returns a response message. By determining the sending mode of the received small data through the interworking gateway, small data can be simultaneously sent to multiple UE in a 3GPP network, thereby optimizing a sending process and reducing network resources used in the sending process.

## Description

### TECHNICAL FIELD

The disclosure relates to the field of wireless communications, and in particular to a small data sending method and system, and User Equipment (UE).

### BACKGROUND

The Machine to Machine (M2M) means the technical means for establishing connection between machines. The M2M technology appeared in the 1990s, but it just remained at theory stage. After the year 2000, with the development of mobile communication technology, it is possible to use the mobile communication technology to implement networking of machines. The M2M service appeared on the market in about 2002, and developed rapidly in the following years. The M2M service becomes the focus of many communication device suppliers and telecom operators.

The M2M service presents many new requirements on a system. For enhancing competitiveness of a mobile network in this aspect, it is necessary to optimize the existing mobile network so as to support the M2M communication more effectively. The existing mobile communication network is designed mainly for the communication between human and human, but is not optimized insufficiently for the communication between machine and machine and the communication between human and machine. Besides, how to provide the M2M communication service at a low cost is also critical to success of the M2M communication deployment. So, a solution that the mobile network supports the M2M communication is required to reuse the existing network to the greatest extent, and to reduce influence of a lot of M2M communications on network and the complexity of operation and maintenance.

For using mobile network resources effectively, the 3rd Generation Partnership Project (3GPP) presents Machine Type Communication (MTC), including Machine to Machine communication and Machine to Man communication, the scope of which is far beyond the past Human to Human (H2H) communication; the MTC is greatly different from the H2H communication in access control, charge, security, Quality of Service (QoS), service mode and other aspects.

In an Evolved Packet System (EPS) architecture of the 3GPP, the EPS includes a radio access network and a core network, wherein the radio access network includes a UMTS Terrestrial Radio Access Network (UTRAN), an Evolved UTRAN (E-UTRAN), a GSM/EDGE Radio Access Network (GERAN) and so on; an Evolved Packet Core (EPC) network includes a Mobility Management Entity (MME), a Serving Gateway, a Packet Data Network Gateway (PGW) and other network elements; a General Packet Radio Service (GPRS) core network includes a Service GPRS Support Node (SGSN) and other elements; the E-UTRAN includes an Evolved Node B (eNB).

MTC UE trigger is one of basic requirements for an MTC system; concerns of such requirements are that: for controlling communication of MTC UE, an MTC server can initiate a poll process in order to perform communication; for the communication initiated by the MTC UE, sometimes the MTC server is required to poll data from the MTC UE; if the MTC server fails in query or an IP address of the MTC UE is not available, then the MTC server can trigger MTC UE to communicate with the MTC UE. If a network cannot trigger the MTC UE, the network reports to the MTC server that the MTC UE trigger is failed. MTC UE trigger is implemented in the 3GPP through control plane signalling.

A lot of services are presented in the form of small data in the MTC communication and smart phones, such as state information of MTC UE, periodical state update, heartbeat information, and an Instant Message (IM) that users need to collect. Such small data is featured by a relatively small data size, for example, the data size is not more than 1K bytes; sometimes the small data is needed to be sent frequently, and sometimes it is needed to be simultaneously sent to a lot of UE.

The MTC UE trigger includes Mobile Originated (MO) and Mobile Terminating (MT), namely, including that MTC UE sends or receives information.

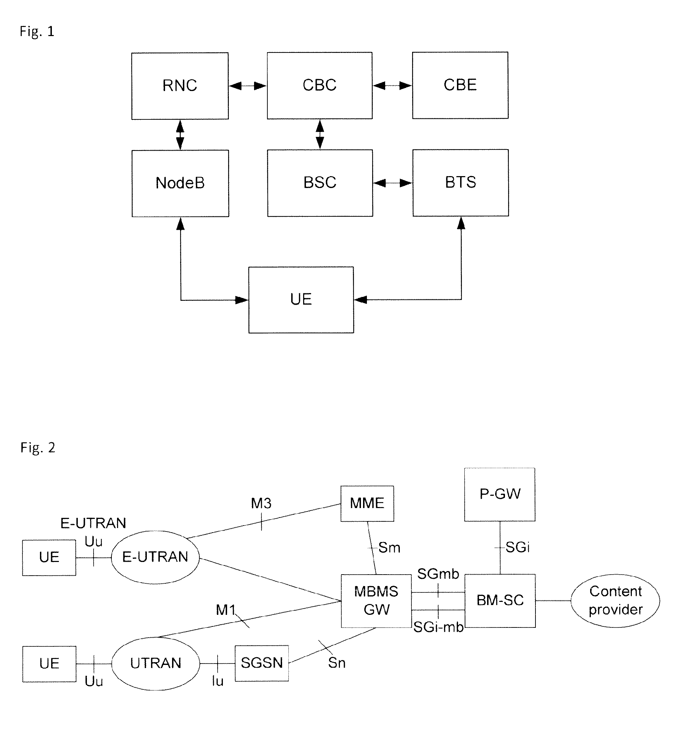

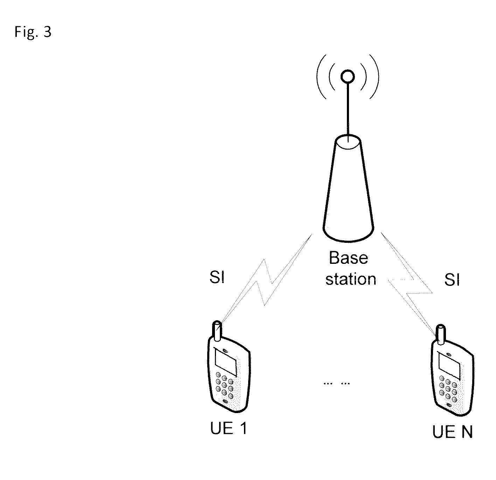

There are several broadcasting modes of sending data information in the 3GPP, such as a Cell Broadcast Service (CBS), a Multimedia Broadcast Multicast Service (MBMS) and System Information (SI); wherein the CBS means that a Cell Broadcast Entity (CBE) sends a broadcast message to UE in one or more cells through a Cell Broadcast Centre (CBC), and the CBS is a one-way message sending service; Fig. 1 shows a system framework diagram of the CBS. The MBMS is a technology of sending data to multiple targets from a data source, which implements sharing of network (including a core network and an access network) resources, and improves the utilization ratio of network resources (especially air interface resources); Fig. 2 shows a system framework diagram of the MBMS. The SI is information sent periodically by a base station by broadcasting to all the UE in an area; Fig. 3 shows a diagram of sending the SI.

The MTC in the 3GPP is in a user plane; an MTC application connecting an MTC user communicates with an MTC server through an Application Program Interface (API), or directly communicates, through a Gi/SGi interface, with a Gateway GPRS Support Node (GGSN)/PGW/Evolved Packet Data Gateway (EPDG) in a 3GPP network; the MTC server communicates with the GGSN/PGW/EPDG through an MTCi interface; the GGSN/PGW/EPDG communicates with the UE through a Radio Access Network (RAN); in a control plane, the MTC server sends control plane signalling including MTC UE trigger information through an MTCsp interface to an MTC Interworking Function (MTC-IWF), or sends the control plane signalling including the MTC UE trigger information through an MTCsms interface to a Short Message Service-Service Centre (SMS-SC)/IP-Short Message-Gateway (IP-SM-GW); the MTC-IWF or the SMS-SC/IP-SM-GW sends the control plane signalling to the MME/SGSN or an SMS-Gateway MSC For Short Message Service (SMS-GMSC) or an SMS router or a Mobile-services Switching Centre (MSC) or a Visitor Location Register (VLR), and then the control plane signalling is sent to the UE through the RAN; wherein the MME/SGSN can also obtain, through a Gr/S6a/S6d interface, the control plane signalling from a Home Subscriber Server (HSS) or a Home Location Register (HLR).

A requirement of grouping MTC UE is presented in the 3GPP TS22.368, for example, an MTC server needs to collect the state information of multiple pieces of MTC UE. The requirement of grouping MTC UE includes that: a system associates a piece of MTC UE with a single MTC group; each MTC function based on group is applied to each member in the MTC group; an Identifier (ID) of the MTC group in the 3GPP network is unique.

In a practical application, there is a requirement of simultaneously sending the small data to a group of MTC UE in the 3GPP network; however, the current problems about how to optimize sending of the small data to a group of MTC UE, and how to reduce the influence of simultaneous sending of a lot of small data on the system cannot be solved effectively.

### SUMMARY

In view of this, the embodiments of the disclosure provide a small data sending method and system and UE, which can send small data with a relatively small data size to multiple pieces of UE.

To this end, a technical solution of the disclosure is implemented as follows.

A small data sending method includes that:
a server sends small data for a target UE group to an interworking gateway;
the interworking gateway determines a broadcasting mode of sending the small data, and sends the small data to the target UE group using the broadcasting mode;

UE which received the small data in the target UE group returns a response message.

In an embodiment, the small data is the one whose data size is not more than 1K bytes, including one or more of followings: a group ID of the target UE group, a target area ID and a data type ID; wherein the target area ID is for indicating an area where the target UE group is, and the data type ID is for indicating that the data is the small data.

In an embodiment, the step that the interworking gateway determines the broadcasting mode of sending the small data may include that:
the interworking gateway determines that the small data is sent by broadcasting through an MBMS, a CBS or SI, according to one or more of following information: network deployment, subscription information, server indication and local policy information.

In an embodiment, when the interworking gateway sends the small data to the target UE group through the MBMS, the step that the interworking gateway sends the small data to the target UE group using the broadcasting mode may include that:
the interworking gateway sends the small data to the UE in the target UE group through a Broadcast Multimedia-Service Centre (BM-SC) via an MBMS process.

In an embodiment, when the interworking gateway sends the small data to the target UE group through the CBS, the step that the interworking gateway sends the small data to the target UE group using the broadcasting mode may include that:
the interworking gateway sends the small data to the area where the target UE group is through a Cell Broadcast Centre (CBC).

Cell Broadcast Centre, when the interworking gateway sends the small data to the target UE group through the SI, the step that the interworking gateway sends the small data to the target UE group using the broadcasting mode may include that:
the interworking gateway sends the small data to a base station through the MME or the SGSN; and
the base station sends the small data through broadcasting to the UE in the target UE group.

In an embodiment, the step that the UE which received the small data in the target UE group returns the response message may include that:
after the UE which received the small data in the target UE group determines that the small data is the one needed by the UE itself, the UE returns the response message to the base station.

A small data sending system is provided, which includes a server, an interworking gateway and UE; wherein,
the server is configured to send the small data for a target UE group to the interworking gateway;
the interworking gateway is configured to determine the broadcasting mode of sending the small data, and send the small data to the target UE group using the broadcasting mode;
the UE is the one in the target UE group and is configured to return the response message after receiving the small data.

In an embodiment, the small data is data which has a data size not more than 1K bytes, including one or more of followings: a group ID of the target UE group, a target area ID and a data type ID; wherein the target area ID is for indicating an area where the target UE group is, and the data type ID is for indicating that the data is the small data.

In an embodiment, the interworking gateway is configured to determine that the small data is sent by broadcasting through a Multimedia Broadcast Multicast Service (MBMS), a Cell Broadcast Service (CBS) or System Information (SI), according to one or more of following information: network deployment, subscription information, server indication and local policy information.

In an embodiment, the interworking gateway is configured to send the small data to the UE in the target UE group through a BM-SC via an MBMS process.

In an embodiment, the interworking gateway is configured to send the small data to the area where the target UE group is through a CBC.

In an embodiment, the system further includes an MME/SGSN and a base station; wherein
the interworking gateway is configured to send the small data to the base station through the MME/SGSN; and
the base station is configured to send the small data by broadcasting to the target UE in the target UE group.

In an embodiment, the UE is configured to return the response message to the base station after receiving the small data and determining that the small data is the one needed by UE itself.

UE is provided, which includes a receiving module and a processing module; wherein,
the receiving module is configured to receive small data that a server sends by broadcasting through a base station;
the processing module is configured to determine whether the received small data is the one needed by the UE, and return the response message if the small data is needed.

In an embodiment, the processing module is configured to determine, according to the group ID of a target UE group in the small data, whether the UE belongs to the target UE group; when the UE belongs to the target UE group, the processing module is further configured to determine an application corresponding to the small data, forward the small data to the application, and return the response message to the base station.

In the embodiments of the disclosure, an interworking gateway determines a broadcasting mode of sending received small data with a relatively small data size, therefore, small data can be simultaneously sent to multiple pieces of UE in a 3GPP network, thereby optimizing a sending process and reducing network resources used in the sending process.

### BRIEF DESCRIPTION OF THE DRAWINGS

Fig. 1 is a structural diagram of an existing CBS system;
Fig. 2 is a structural diagram of an existing MBMS system;
Fig. 3 is a diagram of an existing sending flow of system information;
Fig. 4 is an implementation flowchart of a small data sending method in an embodiment of the disclosure;
Fig. 5 is an implementation flowchart of a first embodiment of the small data sending method in the disclosure;
Fig. 6 is an implementation flowchart of a second embodiment of the small data sending method in the disclosure;
Fig. 7 is an implementation flowchart of a third embodiment of the small data sending method in the disclosure;
Fig. 8 is a structural diagram of a small data sending system in an embodiment of the disclosure; and
Fig. 9 is a structural diagram of UE in an embodiment of the disclosure.

### DETAILED DESCRIPTION

In an embodiment of the disclosure, a server sends small data for a group of UE to an interworking gateway; the interworking gateway determines a broadcasting mode of sending the small data and sends the small data to a target UE group using the broadcasting mode; a piece of UE which received the small data in the target UE group returns a response message; wherein the small data is the one whose data size is not more than 1K bytes, such as state information of an MTC UE, periodical state update, heartbeat information, and an IM that users need to collect; such small data is featured by a relatively small data size, for example, the data size is not more than 1K bytes; sometimes the small data is needed to be sent frequently, and sometimes it is needed to be simultaneously sent to a lot of UE.

For making the aim, the technical solutions and the advantages of the disclosure more clear, the disclosure is elaborated below with reference to the embodiments and the accompanying drawings.

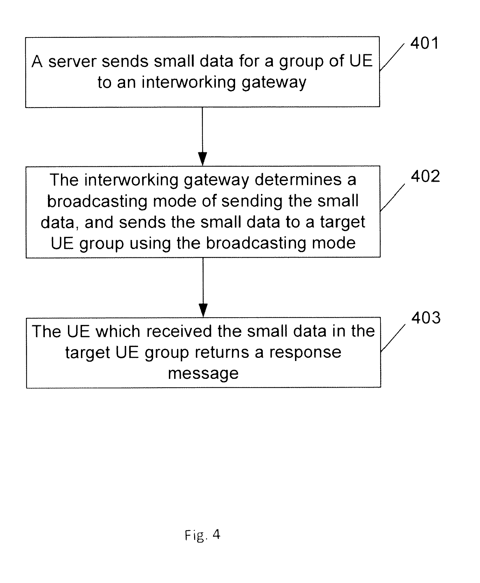

Fig. 4 is an implementation flowchart of a small data sending method in an embodiment of the disclosure; as shown in Fig. 4, the method includes the following steps.

Step 401 includes that a server sends small data for a group of UE to an interworking gateway;
here, the small data for a group of UE is the one whose data size is not more than 1K bytes; the server includes an Application Server (AS) and a Services Capability Server (SCS). The server sets the content of the small data, and the server can be located outside or inside the 3GPP network; besides the small data itself, the content of the small data also includes one or more of the followings: the group ID of the target UE group, the target area ID and the data type ID; wherein the target area ID is for indicating the area where the target UE group is, and the data type ID is for indicating that the data is the small data.

Here, the small data is control plane signalling or user plane data which is transmitted through a control plane or a user plane; generally, the small data can be considered as the data whose data size is not more than 1K bytes, and it can also be set by operators according to need; it is needed to provide the small data to the UE as a subscription function, that is, only the UE subscribing a small data service can implement a function of processing the small data; or else, the small data can only be processed as a common data service.

Step 402 includes that the interworking gateway determines a broadcasting mode of sending the small data, and sends the small data to a target UE group using the broadcasting mode;
here, the interworking gateway may be an MTC-Inter Working Function (MTC-IWF). The server sends the small data to the interworking gateway; the interworking gateway authenticates the server that sent the small data, inquires about the subscription information of the target UE through the HSS/HLR after successful authentication, and determines, according to the subscription information, whether the server authorized the server to send the small data to the target UE; when the server has authorization, the interworking gateway determines that the small data is sent through the MBMS, the CBS or the SI, and the determination is made according to one or more of followings: the network deployment, the subscription information, the server indication and the local policy information.

When the small data is sent to the target UE group through the MBMS, the interworking gateway first sends the small data to the BM-SC; and then the BM-SC sends the small data through the MBMS to the UE in the target UE group.

When the small data is sent to the target UE group through the CBS, the interworking gateway sends the small data through the CBC to the area where the target UE group is.

When the small data is sent to the target UE group through the SI, the interworking gateway sends the small data to the base station through the MME/SGSN; and then the base station sends the small data by broadcasting to the target UE in the target UE group; here, the SI may be a Public Warning System (PWS); the PWS may be for sending warning information to UE through a cell broadcast message, such as a Earthquake and Tsunami Warning System (ETWS), and a Commercial Mobile Alert Service (CMAS).

Step 403 includes that the UE which received the small data in the target UE group returns the response message.

The UE in the UE group is usually subscribed to a UE group, and the association between the UE and the UE group is saved in the HSS/HLR, wherein the UE group is represented by a group ID. After the UE is subscribed to a group, the UE saves a corresponding group ID. The UE which received the small data determines, according to the group ID in the small data, whether it belongs to the UE group corresponding to the group ID, so as to determine whether the received small data is the information needed by the UE itself.

Specifically, the small data is sent to all UE in a related cell in a broadcasting mode; a non-target UE which received the small data ignores or abandons the received small data; the target UE which received the small data forwards the small data to the corresponding application according to the indication in the small data, and returns the response message to the base station.

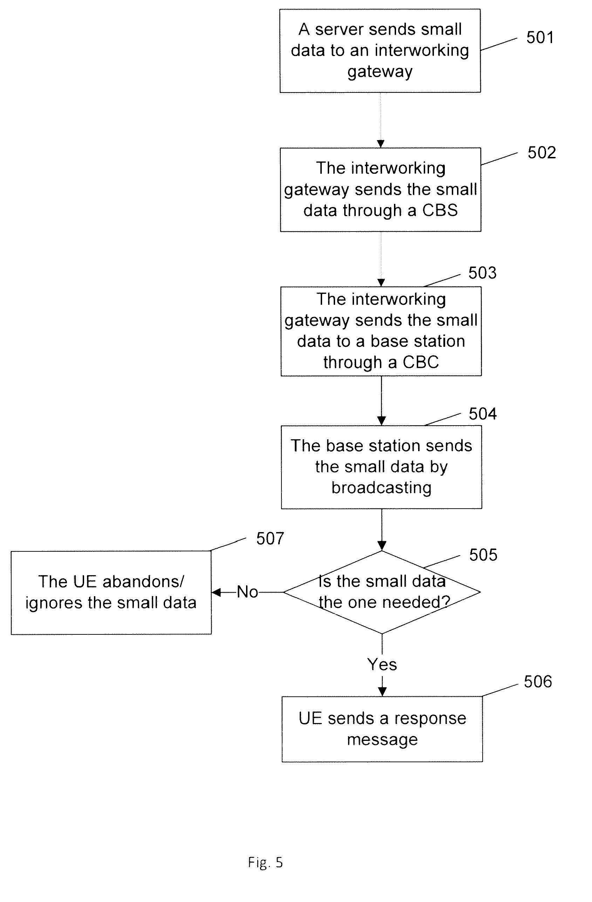

Fig. 5 shows an implementation flow of a first embodiment of the small data sending method in the disclosure; as shown in Fig. 5, the first embodiment is an application that the interworking gateway sends small data through the CBS; the first embodiment includes the following steps.

Step 501 includes that a server sends small data for a group of UE to the interworking gateway;
the small data is the one whose data size is not more than 1K bytes; the server includes the AS and the SCS; The server sets the content of the small data, and the server may be outside or inside the 3GPP network; besides the small data, the content of the small data also includes one or more of the followings: the group ID of target UE group, the target area ID and the data type ID; wherein the target area ID is for indicating the area where the target UE group is, and the data type ID is for indicating that the data is the small data.

Step 502 includes that the interworking gateway sends the small data through the CBS.

The interworking gateway selects a mode of sending the small data according to the network deployment, the subscription information, the indication of the server, the local policy information and so on; for example, the network is deployed with the CBS, or the target UE subscription indicates that the CBS is the first choice, or the server indicates that the CBS should be adopted, or the local information of the interworking gateway indicates that the CBS should be selected.

Step 503 includes that the interworking gateway sends the small data to a base station through the CBC;
specifically, there is an interface between the interworking gateway and the CBC; the interworking gateway sends the small data to the CBC, and then the CBC encapsulates the received small data into a CBS information format, and sends it to the base station.

The base station is the one where the target UE is located, and there may be one or more base stations; the CBC sends the small data to a corresponding base station according to the area ID in the small data.

Step 504 includes that the base station sends the small data by broadcasting to the target UE;
in this step, the base station broadcasts the received small data in a cell where the target UE is.

Step 505 includes that the UE which received the small data determines whether the small data is the one needed by the UE itself; if needed, Step 506 is executed; or else, Step 507 is executed.

The UE determines, according to the group ID in the small data, whether the small data is the one needed by the UE itself; if the UE belongs to the group having the group ID, then the UE determines that the small data is the information needed by it; or else, the UE determines that the small data is not the information needed by it.

Step 506 includes that the UE which received the small data sends the response message to the base station.

The target UE forwards the received small data to a corresponding upper-layer application, and sends the response message to the base station.

Step 507 includes that the UE abandons or ignores the received small data.

When the UE does not belong to the target UE group to which the small data is sent, the UE abandons or ignores the received small data.

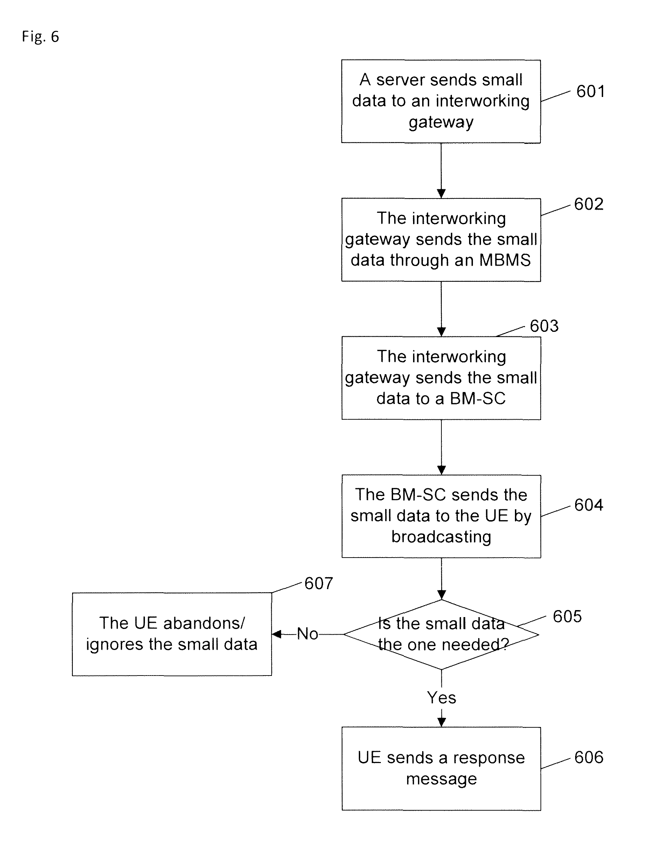

Fig. 6 shows an implementation flow of a second embodiment of the small data sending method in the disclosure; as shown in Fig. 6, the second embodiment is an application of sending the small data through the MBMS; as shown in Fig. 6, the second embodiment includes the following steps.

Step 601 includes that a server sends small data to an interworking gateway.

This step is the same as Step 501, so it will not be repeated here.

Step 602 includes that the interworking gateway sends the small data through the MBMS.

The interworking gateway selects a mode of sending the small data according to the network deployment, the subscription information, the indication of the server, the local policy information and so on; for example, the network is deployed with the MBMS, or the target UE subscription indicates that the MBMS is the first choice, or the server indicates that the MBMS should be adopted, or the local information of the interworking gateway indicates that the MBMS should be selected.

Step 603 includes that the interworking gateway sends the small data to the BM-SC.

There is an interface between the interworking gateway and the BM-SC; the BM-SC encapsulates the received small data into an MBMS data.

Step 604 includes that the BM-SC sends, through an MBMS process, the small data to the UE in the target UE group.

Specifically, the BM-SC sends the gateway the small data which is encapsulated into the MBMS data; the gateway sends the MBMS data to the base station; and the base station sends the MBMS data by broadcasting to the UE in a target area. The gateway here is an MBMS gateway or a GGSN.

Step 605 includes that the UE which received the MBMS data determines whether the MBMS data is the small data needed by the UE itself; if needed, Step 606 is executed; or else, Step 607 is executed.

The UE determines, according to the group ID of the small data, whether the MBMS data is the information needed by it.

Step 606 includes that the UE sends the response message.

Specifically, the UE in the target UE group sends the response message to the base station, and forwards the received small data to the corresponding upper-layer application.

Step 607includes that the UE abandons or ignores the received small data.

Specifically, when the UE does not belong to the target UE group corresponding to the small data, the UE abandons or ignores the received small data.

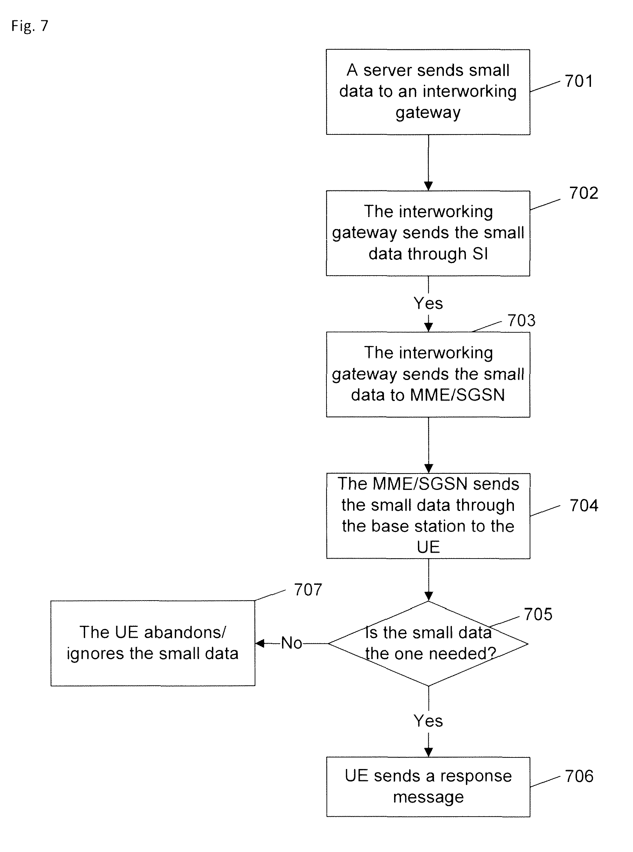

Fig. 7 shows an implementation flow of a third embodiment of the small data sending method in the disclosure; as shown in Fig. 7, the third embodiment is an application scenario of sending the small data through the SI; as shown in Fig. 7, the third embodiment includes the following steps.

Step 701 includes that a server sends small data to an interworking gateway.

This step is the same as Step 501, so it will not be repeated here.

Step 702 includes that the interworking gateway sends the small data through the SI.

The interworking gateway selects a mode of sending the small data according to the network deployment, the subscription information, the indication of the server, the local policy information and so on; for example, the network is not deployed with the CBS or the MBMS, or the target UE subscription indicates that the SI is the first choice, or the server indicates that the SI should be adopted, or the local information of the interworking gateway indicates that the SI should be selected.

Step 703 includes that the interworking gateway sends the small data to the MME/SGSN.

Specifically, the interworking gateway may send the small data to the MME/SGSN directly or through the CBC; if the MTC-IWF sends the small data to the CBC, then the CBC encapsulates the received small data into the CBS information format, and sends it to the MME/SGSN through an SBC interface.

The MME/SGSN is the service MME/SGSN of the target area, and there may be one or more MME/SGSNs.

Step 704 includes that the MME/SGSN sends, through the base station, the small data to the UE.

In this step, the MME/SGSN sends the small data to the base station, and the base station broadcasts, in the cell where the target UE is, the small data through the SI; here, the SI may be the PWS and so on.

Step 705 includes that the UE which received the small data determines whether the small data is the one needed by it; if needed, Step 706 is executed; or else, Step 707 is executed.

The UE determines, according to the group ID in the small data, whether the small data is the one needed by it.

Step 706 includes that the UE sends the response message.

Here, the UE sends the response message to the base station, and forwards the small data to the target upper-layer application according to the indication of the received small data.

Step 707 includes that the UE abandons or ignores the received small data.

When the UE does not belong to the target UE group corresponding to the small data, the UE abandons or ignores the received small data.

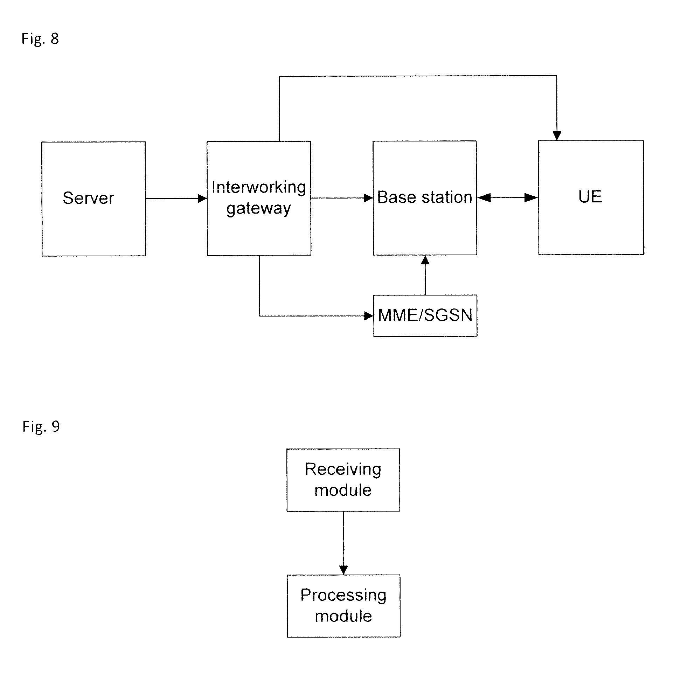

Fig. 8 shows a structure of the small data sending system in the disclosure; as shown in Fig. 8, the system includes a server, an interworking gateway and UE; wherein,
the server is configured to send small data for a group of UE to the interworking gateway;
the interworking gateway is configured to determine a broadcasting mode of sending the small data, and send the small data to the target UE group using the broadcasting mode;
the UE is the one in the target UE group and is configured to return the response message after receiving the small data.

The small data is the one whose data size is not more than 1K bytes, including one or more of followings: the group ID of the target UE group, the target area ID and the data type ID; wherein the target area ID is for indicating then area where the target UE group is, and the data type ID is for indicating that the data is the small data; here, the small data is control plane signalling or user plane data which is transmitted through a control plane or a user plane; it may also be set by operators according to need; it is needed to provide the small data to the UE as the subscription function, that is, only the UE subscribing the small data service can implement the function of processing the small data; or else, the small data can only be processed as the common data service.

The interworking gateway may be configured to determine that the small data is sent by broadcasting through the MBMS, the CBS or the SI, according to one or more of followings: network deployment, subscription information, server indication and local policy information.

The interworking gateway may be configured to send the small data to the UE in the target UE group through the BM-SC via an MBMS process.

The interworking gateway may be configured to send, through the CBC, the small data to the area where the target UE group is.

Furthermore, the system also includes an MME/SGSN and a base station; wherein,
the interworking gateway is configured to send the small data to the base station through the MME/SGSN;
the base station is configured to send the small data by broadcasting to the target UE in the target UE group.

The UE is specifically configured to return the response message to the base station after receiving the small data and determining that the small data is the one needed by it.

Fig. 9 shows a structure of the UE in the disclosure; as shown in Fig. 9, the UE includes a receiving module and a processing module; wherein,
the receiving module is configured to receive small data that the server sends by broadcasting through the base station;
the processing module is configured to determine whether the received small data is the one needed by it, and return the response message if so.

Wherein, the processing module is specifically configured to determine, according to the group ID of target UE group in the small data, whether the UE belongs to the target UE group; when the UE belongs to the target UE group, the processing module is further configured to determine an application corresponding to the small data, forward the small data to the application, and return the response message to the base station.

The above are only the embodiments of the disclosure, and not intended to limit the scope of the claims of the disclosure.

### INDUSTRIAL APPLICABILITY

The disclosure provides a small data sending method and system and UE; the method includes that: a server sends small data for a group of UE to an interworking gateway; the interworking gateway determines a broadcasting mode of sending the small data, and sends the small data to a target UE group using the broadcasting mode; a piece of UE which received the small data in the target UE group returns a response message. By determining the sending mode of the received small data through the interworking gateway, the disclosure can implement that the small data is simultaneously sent to multiple pieces of UE in the 3GPP network, thereby optimizing a sending process and reducing network resources occupied in the sending process.

## Claims

1. A small data sending method, comprising:
sending, by a server, small data for a target User Equipment (UE) group to an interworking gateway;
determining, by the interworking gateway, a broadcasting mode of sending the small data, and sending the small data to the target UE group using the broadcasting mode; and
returning, by UE which received the small data in the target UE group, a response message.

2. The method according to claim 1, wherein the small data is data which has a data size not more than 1K bytes, and the small data comprises one or more of followings: a group Identifier (ID) of the target UE group, a target area ID and a data type ID; wherein the target area ID is for indicating an area where the target UE group is, and the data type ID is for indicating that the data is the small data.

3. The method according to claim 1, wherein determining, by the interworking gateway, the broadcasting mode of sending the small data comprises:
determining, by the interworking gateway, to send the small data by broadcasting through a Multimedia Broadcast Multicast Service (MBMS), a Cell Broadcast Service (CBS) or System Information (SI) according to one or more of following information: network deployment, subscription information, server indication, and local policy information.

4. The method according to claim 1, wherein when the interworking gateway sends the small data to the target UE group through an MBMS, sending, by the interworking gateway, the small data to the target UE group using the broadcasting mode comprises:
sending, by the interworking gateway, the small data to the UE in the target UE group through a Broadcast Multimedia-Service Centre (BM-SC) via an MBMS process.

5. The method according to claim 1, wherein when the interworking gateway sends the small data to the target UE group through a CBS, sending, by the interworking gateway, the small data to the target UE group using the broadcasting mode comprises:
sending, by the interworking gateway, the small data to an area where the target UE group is through a Cell Broadcast Centre (CBC).

6. The method according to claim 1, wherein when the interworking gateway sends the small data to the target UE group through SI, sending, by the interworking gateway, the small data to the target UE group using the broadcasting mode comprises:
sending, by the interworking gateway. the small data to a base station through a Mobility Management Entity (MME) or a Service GPRS Support Node (SGSN); and
sending, by the base station, the small data through broadcasting to the UE in the target UE group.

7. The method according to any one of claims 1 to 6, wherein returning, by the UE which received the small data in the target UE group, the response message comprises:
returning, by the UE, the response message to a base station after the UE which received the small data in the target UE group determines that the small data is data needed by the UE itself.

8. A small data sending system, comprising a server, an interworking gateway and User Equipment (UE); wherein,
the server is configured to send small data for a target UE group to the interworking gateway;
the interworking gateway is configured to determine a broadcasting mode of sending the small data, and send the small data to the target UE group using the broadcasting mode;
the UE is one in the target UE group and is configured to return a response message after receiving the small data.

9. The system according to claim 8, wherein the small data is data which has a data size not more than 1K bytes, and the small data comprises one or more of followings: a group ID of the target UE group, a target area ID and a data type ID; wherein the target area ID is for indicating an area where the target UE group is, and the data type ID is for indicating that the data is the small data.

10. The system according to claim 8, wherein the interworking gateway is configured to determine that the small data is sent by broadcasting through a Multimedia Broadcast Multicast Service (MBMS), a Cell Broadcast Service (CBS) or System Information (SI), according to one or more of following information: network deployment, subscription information, server indication, and local policy information.

11. The system according to claim 8, wherein the interworking gateway is configured to send the small data to the UE in the target UE group through a Broadcast Multimedia-Service Centre (BM-SC) via an MBMS process.

12. The system according to claim 8, wherein the interworking gateway is configured to send the small data to an area where the target UE group is through a Cell Broadcast Centre (CBC).

13. The system according to claim 8, further comprising a Mobility Management Entity (MME)/Service GPRS Support Node (SGSN) and a base station; wherein,
the interworking gateway is configured to send the small data to the base station through the MME/SGSN;
the base station is configured to send the small data through broadcasting to target UE in the target UE group.

14. The system according to claim 13, wherein the UE is configured to return the response message to the base station after receiving the small data and determining that the small data is data needed by the UE itself.

15. User Equipment (UE), comprising a receiving module and a processing module; wherein
the receiving module is configured to receive small data that a server sends by broadcasting through a base station;
the processing module is configured to determine whether the received small data is data needed by the UE, and return a response message if the small data is needed.

16. The UE according to claim 15, wherein the processing module is configured to determine, according to a group ID of a target UE group in the small data, whether the UE belongs to the target UE group; when the UE belongs to the target UE group, the processing module is further configured to determine an application corresponding to the small data, forward the small data to the application, and return the response message to the base station.
